# EUROPEAN PATENT APPLICATION

(11) **EP 1 672 477 A2**
(43) Date of publication of application: **21.06.2006**
(21) Application number: 05025174.3
(22) Date of filing: 17.11.2005
(51) Int. Cl.: G06F 3/12

(54) **Remote content rendering for mobile viewing**

(30) Priority: 14.12.2004 US 11411
(71) Applicant: Hewlett-Packard Development Company, L.P., Houston, TX 77070 (US)
(72) Inventor: Blume, Leo, Robert, Palo Alto, CA 94303 (US); Blackwood, Craig, M., La Jolla, CA 92037 (US); McCoog, Phillip, A., Portland, OR 97212 (US)
(74) Representative: Schoppe, Fritz

(57) **Abstract**

Systems, methodologies, media, and other embodiments associated with remote content rendering for mobile viewing are described. One exemplary system (100) embodiment includes an identifying logic (110) that identifies content elements for which a rendering request is to be made to a remote rendering server (120). The example system (100) may also include a requesting logic (130) that provides the rendering request to the remote rendering server (120) and a receiving logic (140) that receives back a rendered version of the content element from the remote rendering server (120) in response to the rendering request. The example system (100) may also include a distribution logic (150) that distributes the rendered version of the content element to an output logic.

## Description

### BACKGROUND

Computers embedded as part of mobile telephones have limited resources like processor cycles and memory. Therefore, mobile telephones may struggle with tasks like storing memory-intensive items (e.g., fonts) and performing processor intensive tasks (e.g., rendering). Printers associated with mobile telephony may also have limited computing resources and thus may experience similar difficulties storing memory intensive items and performing processor intensive tasks. With limited memory and processor cycles available, conventional printer configurations that include storing multiple fonts may not be practical for the mobile environment. For example, storing multiple fonts in a mobile telephone and/or printer associated with mobile telephony may be impractical, particularly when fonts include a large number of glyphs that may require rendering (e.g., Asian language fonts).

One approach conventional systems take to address limited computing resource availability is to add memory, and thus size, weight, and cost to mobile telephones and/or related printers. Additionally, conventional systems may add a more powerful processor, which increases size, weight, and cost, while reducing battery life and/or creating heat dissipation concerns.

A different approach conventional systems take to address limited computing resource availability is to store memory-intensive items like fonts on a font-server and/or to move rendering services to a rendering server. Thus, conventional mobile telephone systems may communicate with a rendering server that renders an entire document for the mobile telephone and delivers that "viewable content" to the mobile telephone.

### BRIEF DESCRIPTION OF THE DRAWINGS

The accompanying drawings, which are incorporated in and constitute a part of the specification, illustrate various example systems, methods, and so on, that illustrate various example embodiments of aspects of the invention. It will be appreciated that the illustrated element boundaries (e.g., boxes, groups of boxes, or other shapes) in the figures represent one example of the boundaries. One of ordinary skill in the art will appreciate that one element may be designed as multiple elements or that multiple elements may be designed as one element. An element shown as an internal component of another element may be implemented as an external component and vice versa. Furthermore, elements may not be drawn to scale.

**Figure 1** illustrates an example system associated with remote content rendering for mobile viewing.

**Figure 2** illustrates another example system associated with remote content rendering for mobile viewing.

**Figure 3** illustrates yet another example system associated with remote content rendering for mobile viewing.

**Figure 4** illustrates an example method associated with remote content rendering for mobile viewing.

**Figure 5** illustrates another example method associated with remote content rendering for mobile viewing.

Figure 6 illustrates an example computing environment with which example systems and methods illustrated herein can operate.

Figure 7 illustrates an example image forming device with which example systems and methods illustrated herein can operate.

Figure 8 illustrates an example data packet.

Figure 9 illustrates an example application programming interface (API).

### DETAILED DESCRIPTION

Example systems and methods described herein concern remote content rendering for mobile viewing. In one example, the remote rendering may be element based, rather than document based. As used herein, remote rendering refers to rendering that is performed by a logic (e.g., rendering server) that is not physically co-resident with other logics in a communication system (e.g., mobile telephone). Thus, in one example, a remote rendering server may create a graphic representation of a content element like a glyph (printable character, font element), a character from a character set, and other similar elemental level, less than document-sized objects that may be displayed on a mobile telephone and/or printed on a printer. By way of illustration, when a mobile telephone has content to be rendered, but for which it lacks rendering resources (e.g., processor cycles, memory), the mobile telephone may send a signal, directly and/or indirectly, through a wireless communication network (e.g., cellular telephone network), that delivers and/or identifies the content to a remote rendering server. As described above, the content element to be rendered may be smaller in scale (e.g., single glyphs, small sets of characters, illustrations that employ vector graphics) rather than conventional larger scale elements like files, fonts, documents, and the like.

The remote rendering server renders the content element into viewable and/or printable content. The viewable and/or printable content may then be delivered back to the requesting mobile telephone. The requesting mobile telephone may then, for example, display the rendered content element and/or forward the rendered content element to a printer for printing. In another example, the viewable and/or printable content may not be delivered back to the requesting mobile telephone, but rather may be delivered to a printer from the remote rendering server.

In one example, the content elements to be rendered (e.g., text, characters) are associated with an XHTML (Extensible Hypertext Markup Language) template - a template being an XHTML document that contains both static and dynamic elements. Static elements are pre-configured items that do not change, whereas dynamic elements are variable items that are filled in with data as the template is prepared for printing. The static element may be, for example, an item like a static text label. For example, many emails include a "From" text label. Thus, an XHTML-based email template associated with mobile telephony may include as static elements the UNICODE characters for that label. A dynamic element may be, for example, a UNICODE coding for a string received in an email delivered to the mobile telephone. For example, the email may be received from Mr. Huang. The UNICODE character coding the string representing the sender name may be inserted into a location in the XHTML template - for example a variable *from* field associated with the previously mentioned "From" text label. The inserted data may be referred to as a dynamic element.

Rather than rendering an entire document associated with the template (on the phone and/or on the printer), portions of the template may be rendered by a rendering server. This rendering server can render elements on demand or it can store pre-rendered elements and provide them as needed to be used as viewable and/or printable content. Then, when a content element like a character, word, illustration, and so on associated with the template is to be displayed on a mobile telephone and/or printed on a remote printer, example systems and methods may deliver and/or identify the element to a remote rendering server, receive back the rendered element, and display the rendered element and/or retransmit it to a printer for printing. In one example, the rendered element may be delivered, using a Bluetooth (IEEE (Institute of Electrical and Electronics Engineers) 802.15.1) basic print profile (BPP), to a printer that is not physically connected to either the mobile telephone or the rendering server.

In one example, a mobile computing logic associated with a mobile telephone and/or printer may cache a remotely rendered content element to facilitate reducing the number of round trip remote rendering communications that occur. The cached rendered content element may be removed from the cache by, for example, an aging algorithm, a user command, a memory manager, and so on.

The following includes definitions of selected terms employed herein. The definitions include various examples and/or forms of components that fall within the scope of a term and that may be used for implementation. The examples are not intended to be limiting. Both singular and plural forms of terms may be within the definitions.

As used in this application, the term "computer component" refers to a computer-related entity, either hardware, firmware, software, a combination thereof, or software in execution. For example, a computer component can be, but is not limited to being, a process running on a processor, a processor, an object, an executable, a thread of execution, a program, and a computer. By way of illustration, both an application running on a server and the server can be computer components. One or more computer components can reside within a process and/or thread of execution and a computer component can be localized on one computer and/or distributed between two or more computers.

"Computer communication", as used herein, refers to a communication between two or more computing devices (e.g., computer, printer, cellular telephone) and can be, for example, a network transfer, a file transfer, an applet transfer, an email, a hypertext transfer protocol (HTTP) transfer, and so on. A computer communication can occur across, for example, a wireless system (e.g., IEEE 802.11, IEEE 802.15), an Ethernet system (e.g., IEEE 802.3), a token ring system (e.g., IEEE 802.5), a local area network (LAN), a wide area network (WAN), a point-to-point system, a circuit switching system, a packet switching system, combinations thereof, and so on.

"Computer-readable medium", as used herein, refers to a medium that participates in directly or indirectly providing signals, instructions and/or data. A computer-readable medium may take forms, including, but not limited to, non-volatile media, volatile media, and transmission media. Non-volatile media may include, for example, optical or magnetic disks, and so on. Volatile media may include, for example, optical or magnetic disks, dynamic memory and the like. Transmission media may include coaxial cables, copper wire, fiber optic cables, and the like. Transmission media can also take the form of electromagnetic radiation, like that generated during radio-wave and infra-red data communications, or take the form of one or more groups of signals. Common forms of a computer-readable medium include, but are not limited to, a floppy disk, a flexible disk, a hard disk, a magnetic tape, other magnetic media, a CD-ROM, other optical media, punch cards, paper tape, other physical media with patterns of holes, a RAM, a ROM, an EPROM, a FLASH-EPROM, or other memory chip or card, a memory stick, a carrier wave/pulse, and other media from which a computer, a processor or other electronic device can read. Signals used to propagate instructions or other software over a network, like the Internet, can be considered a "computer-readable medium."

"Data store", as used herein, refers to a physical and/or logical entity that can store data. A data store may be, for example, a database, a table, a file, a list, a queue, a heap, a memory, a register, and so on. A data store may reside in one logical and/or physical entity and/or may be distributed between two or more logical and/or physical entities.

"Logic", as used herein, includes but is not limited to hardware, firmware, software and/or combinations of each to perform a function(s) or an action(s), and/or to cause a function or action from another logic, method, and/or system. For example, based on a desired application or needs, logic may include a software controlled microprocessor, discrete logic like an application specific integrated circuit (ASIC), a programmed logic device, a memory device containing instructions, or the like. Logic may include one or more gates, combinations of gates, or other circuit components. Logic may also be fully embodied as software. Where multiple logical logics are described, it may be possible to incorporate the multiple logical logics into one physical logic. Similarly, where a single logical logic is described, it may be possible to distribute that single logical logic between multiple physical logics.

An "operable connection", or a connection by which entities are "operably connected", is one in which signals, physical communications, and/or logical communications may be sent and/or received. Typically, an operable connection includes a physical interface, an electrical interface, and/or a data interface, but it is to be noted that an operable connection may include differing combinations of these or other types of connections sufficient to allow operable control. For example, two entities can be operably connected by being able to communicate signals to each other directly or through one or more intermediate entities like a processor, operating system, logic, software, or other entity. Logical and/or physical communication channels can be used to create an operable connection.

"Signal", as used herein, includes but is not limited to one or more electrical or optical signals, analog or digital signals, data, one or more computer or processor instructions, messages, a bit or bit stream, or other means that can be received, transmitted and/or detected.

"Software", as used herein, includes but is not limited to, one or more computer or processor instructions that can be read, interpreted, compiled, and/or executed and that cause a computer, processor, or other electronic device to perform functions, actions and/or behave in a desired manner. The instructions may be embodied in various forms like routines, algorithms, modules, methods, threads, and/or programs including separate applications or code from dynamically and/or statically linked libraries. Software may also be implemented in a variety of executable and/or loadable forms including, but not limited to, a stand-alone program, a function call (local and/or remote), a servelet, an applet, instructions stored in a memory, part of an operating system or other types of executable instructions. It will be appreciated by one of ordinary skill in the art that the form of software may depend, for example, on requirements of a desired application, the environment in which it runs, and/or the desires of a designer/programmer or the like. It will also be appreciated that computer-readable and/or executable instructions can be located in one logic and/or distributed between two or more communicating, co-operating, and/or parallel processing logics and thus can be loaded and/or executed in serial, parallel, massively parallel and other manners.

Suitable software for implementing the various components of the example systems and methods described herein may be produced using programming languages and tools like Java, Pascal, C#, C++, C, CGI, Perl, SQL, APls, SDKs, assembly, firmware, microcode, and/or other languages and tools. Software, whether an entire system or a component of a system, may be embodied as an article of manufacture and maintained or provided as part of a computer-readable medium as defined previously. Another form of the software may include signals that transmit program code of the software to a recipient over a network or other communication medium. Thus, in one example, a computer-readable medium has a form of signals that represent the software/firmware as it is downloaded from a web server to a user. In another example, the computer-readable medium has a form of the software/firmware as it is maintained on the web server. Other forms may also be used.

"User", as used herein, includes but is not limited to one or more persons, software, computers or other devices, or combinations of these.

Some portions of the detailed descriptions that follow are presented in terms of algorithms and symbolic representations of operations on data bits within a memory. These algorithmic descriptions and representations are the means used by those skilled in the art to convey the substance of their work to others. An algorithm is here, and generally, conceived to be a sequence of operations that produce a result. The operations may include physical manipulations of physical quantities. Usually, though not necessarily, the physical quantities take the form of electrical or magnetic signals capable of being stored, transferred, combined, compared, and otherwise manipulated in a logic and the like.

It has proven convenient at times, principally for reasons of common usage, to refer to these signals as bits, values, elements, symbols, characters, terms, numbers, or the like. It should be borne in mind, however, that these and similar terms are to be associated with the appropriate physical quantities and are merely convenient labels applied to these quantities. Unless specifically stated otherwise, it is appreciated that throughout the description, terms like processing, computing, calculating, determining, displaying, or the like, refer to actions and processes of a computer system, logic, processor, or similar electronic device that manipulates and transforms data represented as physical (electronic) quantities.

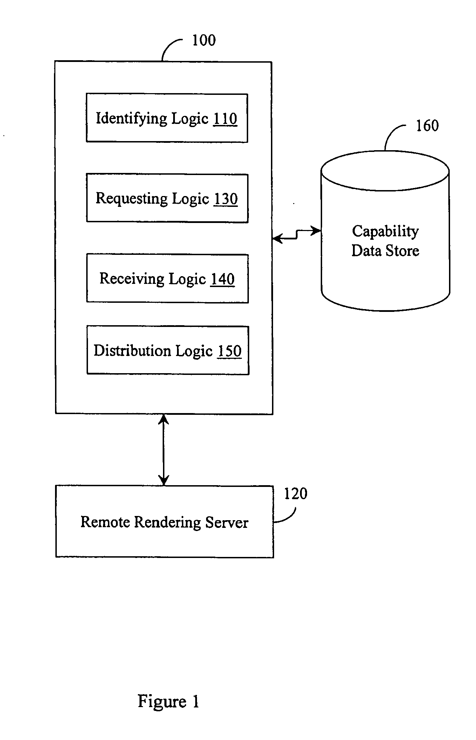

**Figure 1** illustrates an example system **100** associated with remote content rendering for mobile viewing. The system **100** may include an identifying logic **110** that is configured to identify a content element for which a rendering request is to be made to a remote rendering server **120.** In one example, a content element refers to an item that may be rendered, where the item is less than an entire document in a mobile computing device like a mobile telephone. Thus a content element may be rendered on an elemental, or element-by-element basis, rather than on a document basis. A content element may be, for example, a glyph, a font element, a character, a vector graphics based figure, a table, a chart, a paragraph, and so on. In one example, the content element may be an Asian language font character like a Korean, Japanese, or Chinese character. In another example, the content element may be a logo. In one example, the content element may be associated with an XHTML template. For example, the content element may be pre-programmed into an XHTML template (e.g., a static element), or may be received as a data value that is stored in a variable location in an XHTML template (e.g., a dynamic element). Thus, example systems and methods may request remote element rendering without requesting or performing high-level page layout. The high-level page layout may be left, for example, to a printer that will print a document.

In one example, the identifying logic **110** may be configured to identify the content element by comparing a first computing resource that is required to render the content element to a second computing resource that is available on a mobile computing platform with which the system **100** is associated. For example, the identifying logic **110** may determine whether memory and/or processing cycles available on a mobile telephone are sufficient to render a glyph. Thus, the identifying logic **110** may be configured to determine whether a content element can or should be rendered locally on system **100.** For example, identifying logic **110** may compare a content element to elements stored in a data store to determine whether the content element should be remotely rendered. By way of illustration, identifying logic **110** may determine to send a JPEG (Joint Photographic Experts Group) image element to a printer for printer-based rendering but determine that a PNG (Portable Network Graphics) image element is to be sent to a remote server for conversion into a compatible JPEG format. Similarly, the identifying logic **110** may determine that an ASCII-encoded (American Standard Code for Information Interchange) character is to be sent to a printer while an Asian character encoded in Unicode UTF-8 (Universal Transformation Format) is to be sent to a remote server for rendering.

Decisions like whether to render a content element locally, which remote service to use, and so on, may be based, at least in part, on information stored in capability data store **160.** Capability data store **160** may store, for example, information concerning devices with which system **100** may interact and their respective capabilities. For example, information concerning remote rendering servers available to provide rendering services, rendering server content element rendering capability, printers available to print an item, printer content element rendering capability, and so on, may be stored in capability data store **160.** In one example, capability data store **160** may be dynamically updated as devices and/or services become (un)available. Capability data store **160,** may, in different examples, be local to the requesting device or may be local to the rendering services.

The system **100** may also include a requesting logic **130** that is configured to provide the rendering request to the remote rendering server **120.** The requesting logic **130** may provide the content element to the remote rendering server **120** and/or may identify the content element to the remote rendering server **120.** For example, a "boilerplate" paragraph may contain one hundred characters to be rendered. However, the boilerplate paragraph may be identifiable (e.g., by a GUID (globally unique identifier)) that can be provided to the remote rendering server **120.** Thus, in some cases, rather than passing the actual item to be remotely rendered, the requesting logic **130** may pass an identifier to the content element. In one example, the requesting logic **130** may provide the rendering request to multiple remote rendering servers. Requesting logic **130** may select a remote rendering server based on parameters like availability, quality, cost, and so on. In another example, requesting logic **130** may utilize multiple rendering services substantially simultaneously to process a set of rendering requests in parallel. In this example, requesting logic **130** may tag requests with unique identifiers that are used by the receiving logic **140** to sort out rendering responses and assemble received rendered content in a desired order.

The requesting logic **130** may provide the rendering request to the remote rendering server **120** using various methods. By way of illustration, the requesting logic **130** may provide the rendering request to the remote rendering server **120** via a wireless communication. The wireless communication may conform, for example, to various protocols like an IEEE 802.11 protocol, an IEEE 802.15.1 protocol, and/or an IEEE 802.15.4 protocol. By way of further illustration, the wireless communication may be a cellular telephone communication.

The system **100** may also include a receiving logic **140** that is configured to receive a rendered version of the content element from the remote rendering server **120** in response to the rendering request. In one example, the receiving logic **140** may be configured to cache the rendered version of the content element. In this example, the identifying logic **110** and/or the requesting logic **130** may also be configured to consider cached rendered content elements before a rendering request is provided to the remote rendering server **120.** By way of illustration, an identifying logic **110** may first determine whether a mobile telephone or a target printer can render a character. If the identifying logic **110** determines that the mobile telephone cannot render the character, then before controlling a requesting logic **130** to make a remote rendering request, the identifying logic **110** may examine a cache of rendered characters (not illustrated) to determine whether that character has already been remotely rendered and is available to the mobile telephone. This facilitates reducing the number of round-trip remote rendering communications.

The system **100** may also include a distribution logic **150** that is configured to distribute the rendered version of the content element to an output logic. In one example, the output logic may be a display on a mobile telephone while in another example the output logic may be a print logic associated with a printer. Thus "viewing" the remotely rendered content element may include displaying the content on a mobile phone, printing the rendered content element on a printer, and so on.

The system **100** may be associated with, for example, a mobile telephone (e.g., cellular telephone, satellite telephone), a printer, and other similar devices. In one example, being associated with a mobile telephone or other similar device includes being operably connected to, but separate from the device. In another example, being associated with a mobile telephone or other similar device includes being operably connected to and incorporated into and/or onto the device.

The system **100** may be associated with various devices. In one example, the distribution logic **150** may be configured to distribute the rendered version of the content element to a first output logic on a mobile telephone and to a second output logic associated with a printer. The distribution logic **150** may be located on a mobile telephone and pass the rendered content element to a printer with and/or without displaying the rendered content element on a display on the mobile telephone. The rendered content element may be provided to a printer using, for example, a Bluetooth Basic Print Profile method.

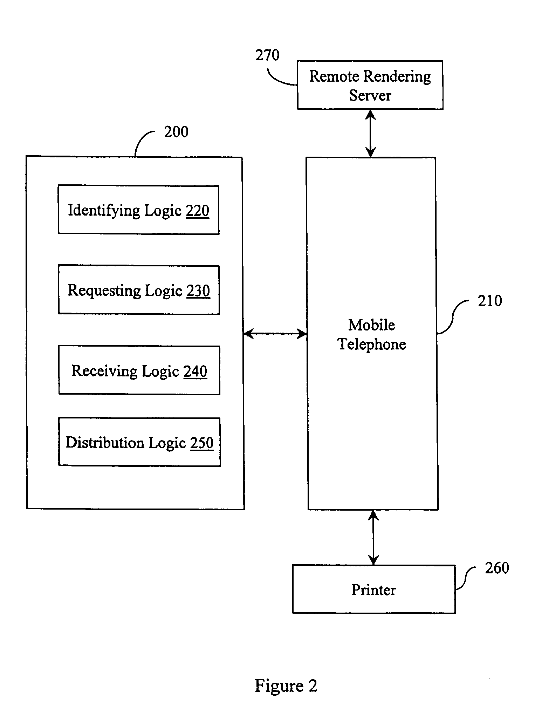

**Figure 2** illustrates an example system **200** associated with remote content rendering for mobile viewing. The system **200** is illustrated being operably connected to a mobile telephone. In one example, the system **200** includes an identifying logic **220** that is configured to identify a content element for which a rendering request is to be made to a remote rendering server **270.** The content element may be, for example, a glyph, a font element, a character, a vector graphics based figure, and the like. Furthermore, the content element may be associated with an XHTML template.

The system **200** may also include a requesting logic **230** that is configured to provide the rendering request to the remote rendering server **270** via the mobile telephone **210.** The mobile telephone **210** may provide the content element to the remote rendering server **270** via a wireless communication. The system **200** may also include a receiving logic **240** that is configured to receive and cache a rendered version of the content element from the remote rendering server **270,** via the mobile telephone **210,** in response to the rendering request.

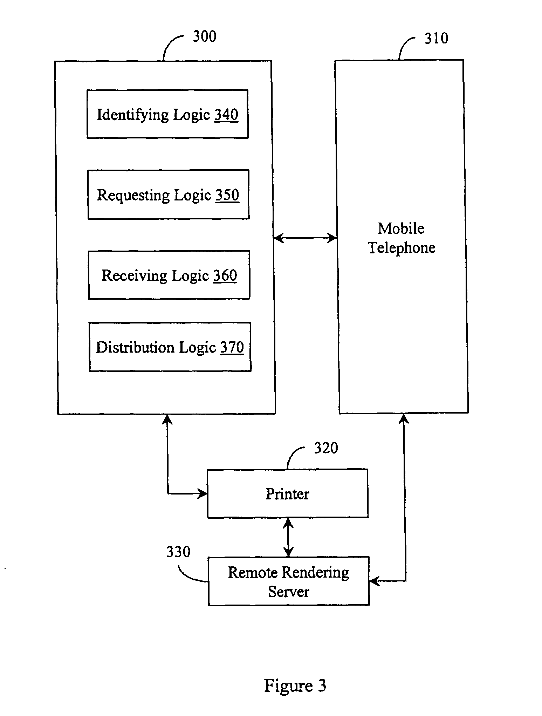

The system **200** may also include a distribution logic 250 that is configured to distribute the rendered version of the content element to a first output logic associated with the mobile telephone **210** and a second output logic associated with a printer **260.** The mobile telephone **210** may serve as a conduit through which the rendered version of the content element is delivered to the printer **260.** In another example, like that illustrated in **Figure 3,** the rendered version of the content element may be delivered to a printer **320** without passing through the mobile telephone **310.**

**Figure 3** illustrates an example system **300** associated with remote content rendering for mobile viewing. The system **300** includes logics similar to those described in connection with **Figures 1** and **2.** For example, system 300 includes an identifying logic **340,** a requesting logic 350, a receiving logic 360, and a distribution logic **370.**

The system **300** is illustrated being in data communication contact with both a mobile telephone **310** and a printer **320.** Similarly, a remote rendering server **330** is illustrated being in data communication contact with both the mobile telephone **310** and the printer **320.** Being in data communication contact includes being able to achieve computer communications between devices. Thus, messages (e.g., wireless messages, wire-based messages, mixes of wireless & wired messages) may pass between the mobile telephone **310,** the printer **320,** the system **300,** and the remote rendering server **330.** Therefore, a request to remotely render a content element may be initiated, for example, by the mobile telephone **310** and/or the printer **320.** Similarly, a remotely rendered content element can be delivered, directly, and/or indirectly (e.g., via another device), to the mobile telephone **310** and/or the printer **320.**

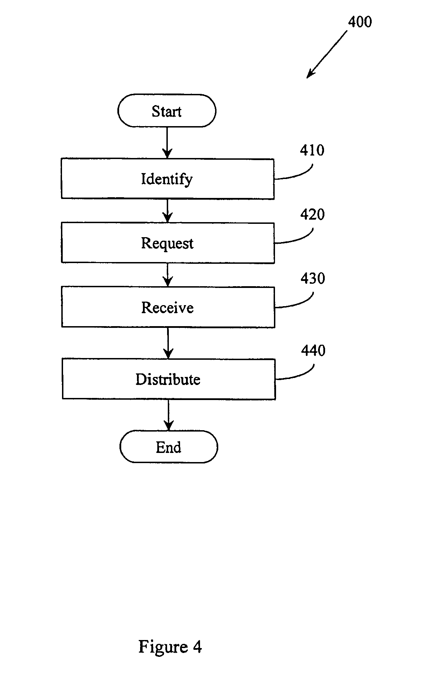

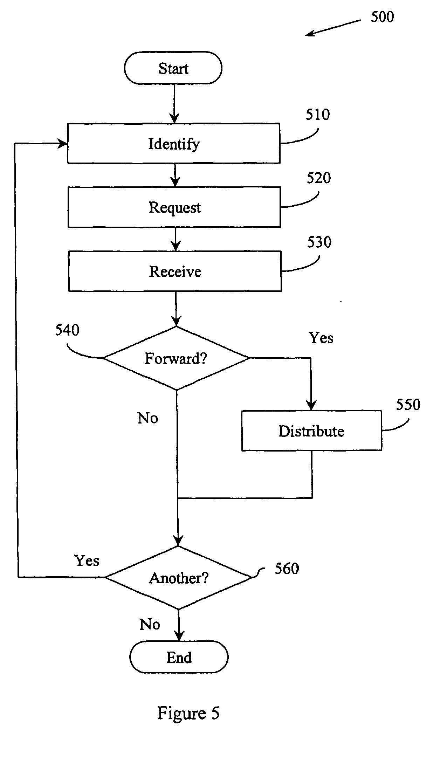

Example methods may be better appreciated with reference to the flow diagrams of **Figures 4** and **5.** While for purposes of simplicity of explanation, the illustrated methodologies are shown and described as a series of blocks, it is to be appreciated that the methodologies are not limited by the order of the blocks, as some blocks can occur in different orders and/or concurrently with other blocks from that shown and described. Moreover, less than all the illustrated blocks may be required to implement an example methodology. Furthermore, additional and/or alternative methodologies can employ additional, not illustrated blocks.

In the flow diagrams, blocks denote "processing blocks" that may be implemented with logic. The processing blocks may represent a method step and/or an apparatus element for performing the method step. A flow diagram does not depict syntax for any particular programming language, methodology, or style (e.g., procedural, object-oriented). Rather, a flow diagram illustrates functional information one skilled in the art may employ to develop logic to perform the illustrated processing. It will be appreciated that in some examples, program elements like temporary variables, routine loops, and so on, are not shown. It will be further appreciated that electronic and software applications may involve dynamic and flexible processes so that the illustrated blocks can be performed in other sequences that are different from those shown and/or that blocks may be combined or separated into multiple components. It will be appreciated that the processes may be implemented using various programming approaches like machine language, procedural, object oriented and/or artificial intelligence techniques.

**Figure 4** illustrates an example method **400** associated with remote content rendering for mobile viewing. The method **400** may include, at **410,** identifying a subset of printable elements in a set of printable elements available to a wireless computing device. The set of printable elements may form, for example, a document, an email, a text, a message, and so on. The subset of printable elements that are identified may be content elements for which remote rendering may be requested. Remote rendering includes performing the rendering of the content elements in a logic that is remote (e.g., not in, not part of, not physically attached to) the wireless computing device in which the subset of printable elements are identified. For example, the subset of printable elements may be located in a mobile telephone while the remote rendering may be performed in a server that is in data communication contact (e.g., via cellular telephone network) with the mobile telephone. It is to be appreciated that the data communication contact may not be exclusively via a cellular network, and that the complete journey between the mobile telephone and the remote rendering server may include wired and/or wireless portions.

In one example, identifying **410** the subset of printable elements may include comparing a computing resource that will be required to render the subset of printable elements to a computing resource available on the mobile device (e.g., telephone, printer). If the mobile device does not have the correct amount, type, and/or availability of resource(s) required to render the subset of printable elements, then the subset of printable elements may be identified as elements for which remote rendering may be requested.

At **420,** remote rendering of the subset of printable elements may be requested. In one example, requesting remote rendering of the subset of printable elements may include transmitting a wireless computer communication. The communication may be made according to, for example, an IEEE 802.15.1 protocol, an IEEE 802.11 protocol message, an IEEE 802.15.4 message, a cellular telephone message, and so on. In one example, the subset of printable elements may be less than an entire document in the mobile computing device that is requesting remote rendering. The printable elements may include, for example, a glyph(s), a font element(s), a character(s), a vector graphics based figure(s), a table, a chart, a logo, and the like. The subset of printable elements may include, for example, a static element associated with an XHTML template and a dynamic element associated with an XHTML template.

At **430,** a rendered version of the subset of printable elements may be received. The rendered version may be received via, for example, a wireless communication like those used to transmit the remote rendering request. In one example, receiving **430** a rendered version of the subset of printable elements includes caching the rendered version. Thus, identifying **410** a subset of printable elements for which a remote rendering request may be made may include determining whether there is a cached rendered version of a printable element.

At **440,** the rendered version of the subset of printable elements may be distributed to logics including, but not limited to, a display logic associated with the wireless computing device, and a print logic associated with the wireless computing device. Thus, the rendered version may be displayed on a mobile telephone that requested remote rendering of the printable element(s) and/or passed on to a printer for printing.

While **Figure 4** illustrates various actions occurring in serial, it is to be appreciated that various actions illustrated in **Figure 4** could occur substantially in parallel. By way of illustration, a first process could identify printable elements for which remote rendering will be required. Similarly, a second process could request remote rendering, while a third process receives remotely rendered printable elements and a fourth process distributes the received remotely rendered printable elements. While four processes are described, it is to be appreciated that a greater and/or lesser number of processes could be employed and that lightweight processes, regular processes, threads, and other approaches could be employed. It is to be appreciated that other example methods may, in some cases, also include actions that occur substantially in parallel.

**Figure 5** illustrates an example method **500** associated with remote content rendering for mobile viewing. Like method **400,** method **500** includes, at 510, identifying a subset of printable elements for which remote rendering will be requested, and, at **520,** requesting remote rendering. Method **500** also includes, at **530,** receiving the remotely rendered printable element.

Method **500** may also include, at **540,** making a determination concerning whether a received remotely rendered printable element is to be forwarded to another device. For example, a mobile telephone that requests remote rendering of a printable element may forward that element to a printer for printing. If the determination at **540** is Yes, then at **550,** the rendered version of the subset of printable elements may be distributed from a first mobile computing device (e.g., mobile telephone) to a second mobile computing device (e.g., printer). While a mobile telephone forwarding to a printer is described, it is to be appreciated that other store and forward combinations like printer to telephone, telephone to PDA (Personal Digital Assistant), PDA to printer, and so on, could be employed. In one example, the rendered version of the subset of printable elements is distributed at **550** from the first mobile computing device to the second mobile computing device using a Bluetooth Basic Print Profile methodology.

At **560,** a determination is made concerning whether to continue processing printable elements. If the determination is No, method **500** may terminate, otherwise processing may return to an earlier action like identifying at **510.** The determination at **560** may be No when there is no more content to be rendered, for example.

In one example, methodologies are implemented as processor executable instructions and/or operations stored on a computer-readable medium. Thus, in one example, a computer-readable medium may store processor executable instructions operable to perform a method that includes identifying a subset of printable elements in a set of printable elements available to a wireless computing device (e.g., mobile telephone). Remote rendering of the subset of printable elements may be requested. The subset of printable elements may occupy less than an entire document in the wireless computing device. Identifying the subset of printable elements may include comparing a computing resource required to render the subset of printable elements to a computing resource that is available to render the subset of printable elements.
The subset of printable elements may include, for example, a static element associated with an XHTML template, a dynamic element associated with an XHTML template, and the like.

The method may also include requesting remote rendering for the subset of printable elements. Requesting remote rendering of the subset of printable elements may include transmitting a wireless computer communication via methods including, but not limited to, an IEEE 802.15.1 protocol message, an IEEE 802.11 protocol message, an IEEE 802.15.4 protocol message, and a cellular telephone message. The method may also include receiving and caching a rendered version of the subset of printable elements and distributing the rendered version of the subset of printable elements. The subset of printable elements may be distributed to, for example, a display logic associated with the wireless computing device, a print logic associated with the wireless computing device, and so on. The rendered version of the subset of printable elements may be distributed using, for example, a Bluetooth Basic Print Profile methodology. While the above method is described being stored on a computer-readable medium, it is to be appreciated that other example methods described herein can also be stored on a computer-readable medium.

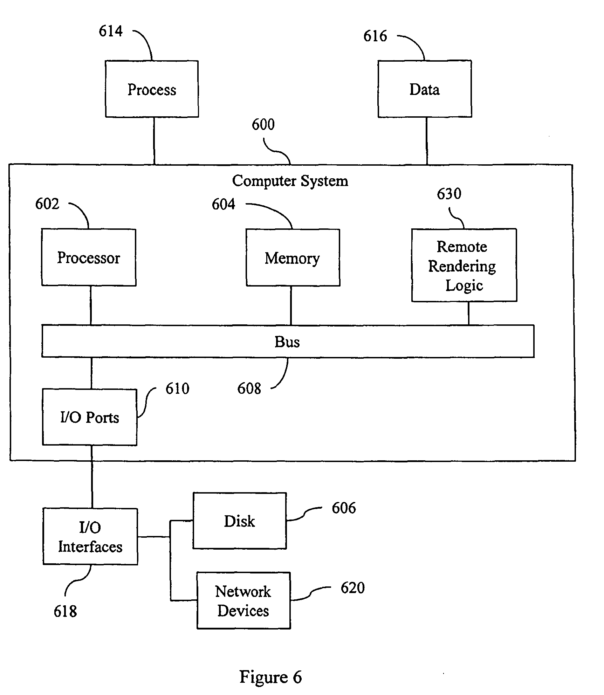

**Figure 6** illustrates a computer system **600** that includes a processor **602,** a memory **604,** and input/output ports **610** operably connected by a bus **608.** In one example, the computer system **600** may include a remote rendering logic **630** configured to facilitate requesting remote elemental level rendering of content elements for mobile viewing (e.g., printing, displaying). Thus, the remote rendering logic **630,** whether implemented in computer system **600** as hardware, firmware, software, and/or a combination thereof may provide means for selecting a content element to be remotely rendered, means for requesting remote rendering of the content element, and means for distributing a remotely rendered content element from a first mobile computing logic to a second mobile computing logic. The first mobile computing logic may be, for example, associated with a cellular telephone while the second mobile computing logic may be, for example, associated with a printer to which the cellular telephone transmits a print request. The computer system **600** may be implemented, for example, in a cellular telephone, and/or a printer.

The processor **602** can be a variety of various processors including dual microprocessor and other multi-processor architectures. The memory **604** can include volatile memory and/or non-volatile memory. The non-volatile memory can include, but is not limited to, ROM, PROM, EPROM, EEPROM, and the like. Volatile memory can include, for example, RAM, synchronous RAM (SRAM), dynamic RAM (DRAM), synchronous DRAM (SDRAM), double data rate SDRAM (DDR SDRAM), and direct RAM bus RAM (DRRAM).

A "disk" **606** may be operably connected to the computer system 600 via, for example, an input/output interface (e.g., card, device) **618** and an input/output port **610.** The disk **606** can include, but is not limited to, devices like a solid state disk drive, a flash memory card, and/or a memory stick. The memory **604** can store processes **614** and/or data **616,** for example. The disk **606** and/or memory **604** can store an operating system that controls and allocates resources of the computer system **600.**

The bus **608** can be a single internal bus interconnect architecture and/or other bus or mesh architectures. While a single bus is illustrated, it is to be appreciated that computer system **600** may communicate with various devices, logics, and peripherals using other busses that are not illustrated (e.g., PCIE, SATA, Infiniband, 1394, USB, Ethernet). The bus **608** can be of a variety of types including, but not limited to, a memory bus or memory controller, a peripheral bus or external bus, a crossbar switch, and/or a local bus. The local bus can be of varieties including, but not limited to, an industrial standard architecture (ISA) bus, a microchannel architecture (MSA) bus, an extended ISA (EISA) bus, a peripheral component interconnect (PCI) bus, a universal serial (USB) bus, and a small computer systems interface (SCSI) bus.

The computer system **600** may interact with input/output devices via i/o interfaces **618** and input/output ports **610.** Input/output devices can include, but are not limited to, a microphone, cameras, network devices 620, and the like. The input/output ports **610** can include but are not limited to, serial ports, parallel ports, and USB ports.

The computer system **600** can operate in a network environment and thus may be connected to network devices **620** via the i/o interfaces **618,** and/or the i/o ports **610.** Through the network devices **620,** the computer system **600** may interact with a network. Through the network, the computer system **600** may be logically connected to remote computers. One remote computer may perform the remote rendering services described herein. The networks with which the computer system **600** may interact include, but are not limited to, a local area network (LAN), a wide area network (WAN), and other networks. The network devices 620 can connect to LAN technologies including, but not limited to, fiber distributed data interface (FDDI), copper distributed data interface (CDDI), Ethernet (IEEE 802.3), token ring (IEEE 802.5), wireless computer communication (IEEE 802.11), Bluetooth (IEEE 802.15.1), Zigbee (IEEE 802.15.4) and the like. Similarly, the network devices **620** can connect to WAN technologies including, but not limited to, point to point links, circuit switching networks like integrated services digital networks (ISDN), packet switching networks, and digital subscriber lines (DSL). While individual network types are described, it is to be appreciated that communications via, over, and/or through a network may include combinations and mixtures of communications.

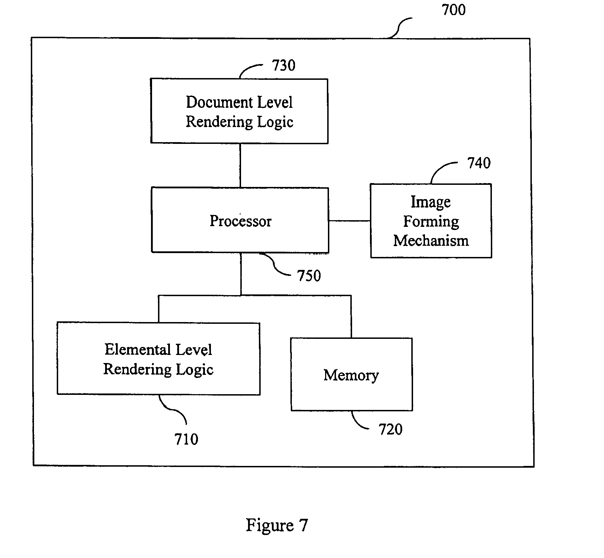

**Figure 7** illustrates an example image forming device **700** (e.g., printer) that includes an elemental level rendering logic **710** similar to example systems described herein. The elemental level rendering logic **710** may be configured to perform executable methods like those described herein, and thus may participate in generating requests for remotely rendering smaller content elements (e.g., single character, subset of glyphs, image) and/or receiving remotely rendered elemental level content elements. The elemental level rendering logic **710** may be permanently and/or removably attached to the image forming device **700.**

The image forming device **700** may receive print data to be printed. Thus, image forming device **700** may also include a memory **720** configured to store print data or to be used more generally for image processing. The image forming device **700** may also include a conventional document level rendering logic **730** configured to generate a printer-ready image from print data associated with document-sized content. Example systems and methods described herein may be configured to request elemental rendering of characters, images, illustrations, and so on, without requesting rendering of high-level page layout. Thus, rendering associated with page layout, like determining whether an image can fit on the bottom of a page below a block of text or whether the image should flow to the next page, may be left for a device like image forming device **700.**

Rendering may vary based on the format of the data involved and the type of imaging device. In general, the page level rendering logic **730** converts conventional high-level data into a graphical image for display or printing (e.g., the print-ready image). For example, one form is the process of converting HTML into an image for display/printing. It is to be appreciated that the image forming device **700** may receive printer-ready data that does not need to be rendered and thus the page level rendering logic **730** may not appear in some image forming devices. In one example, the image forming device **700** may perform some rendering locally, may request that some rendering be performed remotely, and/or may have rendered data supplied to it. The rendered data may have been rendered, for example, by a remote rendering server at the request of a mobile telephone.

The image forming device **700** may also include an image forming mechanism **740** configured to generate an image onto print media from the print-ready image. The image forming mechanism **740** may vary based on the type of the imaging device **700** and may include a laser imaging mechanism, other toner-based imaging mechanisms, an ink jet mechanism, digital imaging mechanism, or other imaging reproduction engine. A processor **750** may be included that is implemented with logic to control the operation of the image-forming device **700.** In one example, the processor **750** includes logic that is capable of executing Java instructions. Other components of the image forming device **700** are not described herein but may include media handling and storage mechanisms, sensors, controllers, and other components involved in the imaging process.

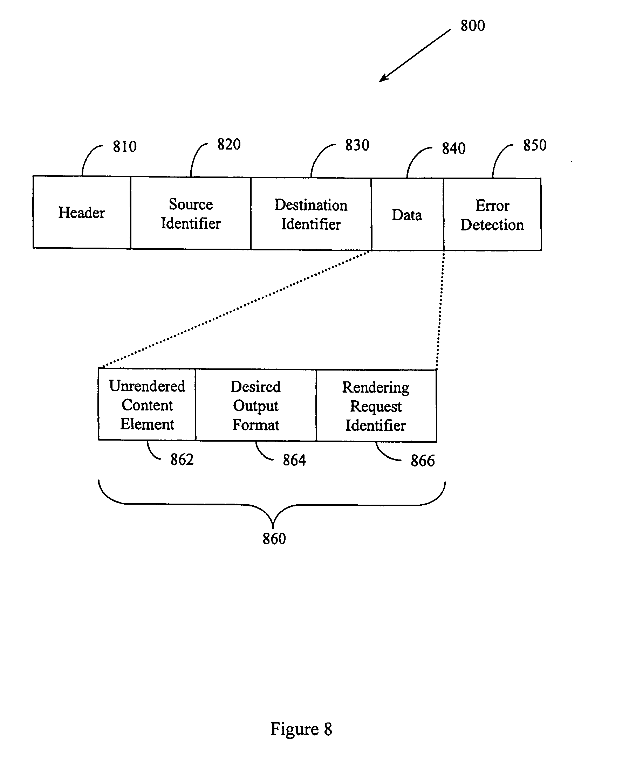

Referring now to **Figure 8,** information can be transmitted between various computer components and/or logics associated with remote content rendering for mobile viewing as described herein via a data packet **800.** In one example, data packet **800** may be a request for the remote rendering of a content item. The data packet **800** includes a header field **810** that includes information like the length and type of packet. A source identifier **820** follows the header field **810** and includes, for example, an address of the computer component and/or logic from which the packet **800** originated. Following the source identifier **820,** the packet **800** includes a destination identifier **830** that holds, for example, an address of the computer component and/or logic to which the packet **800** is ultimately destined. Source and destination identifiers can be, for example, a GUID, a uniform resource locator (URL), a path name, and the like. The data field **840** in the packet **800** includes various information intended for the receiving computer component and/or logic. The data packet **800** ends with an error detecting and/or correcting field **850** whereby a computer component and/or logic can determine if it has properly received the packet **800.** While five fields are illustrated in a certain order, it is to be appreciated that a greater and/or lesser number of fields arranged in different orders can be present in example data packets. Furthermore, it is to be appreciated that in some examples data packet **800** may be sent in clear text form or may be encrypted.

**Figure 8** also illustrates sub-fields **860** within the data field **840.** The subfields **860** described are merely exemplary and it is to be appreciated that a greater and/or lesser number of sub-fields could be employed with various types of data germane to remote rendering of content elements. The sub-fields **860** include a first field **862** that holds, for example, an unrendered content element like a character code, a glyph, a vector graphics representation of an image, and the like. The sub-fields **860** may also include a second field **864** that stores a desired output format (e.g., JPEG) into which the unrendered content element is to be rendered. The sub-fields **860** may also include a third field **866** that stores, for example, a rendering request identifier that facilitates connecting rendered data to a rendering request and/or assembling received rendered content into a desired order.

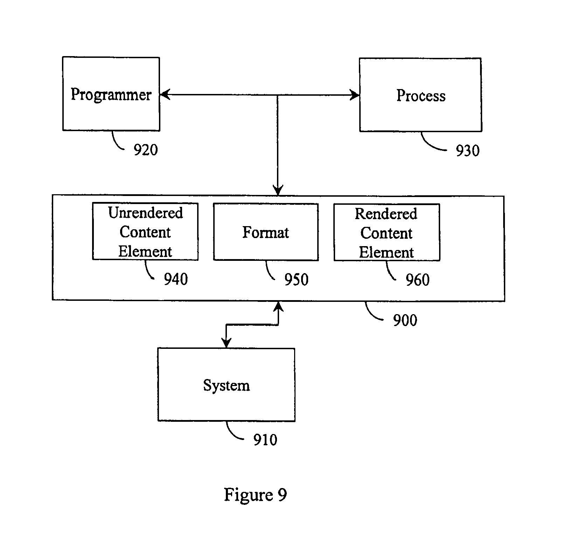

Referring now to **Figure 9,** an application programming interface (API) **900** is illustrated providing access to a system **910** for remote content rendering. The API **900** can be employed, for example, by a programmer **920** and/or a process 930 to gain access to processing performed by the system **910.** For example, a programmer **920** can write a program to access the system **910** (e.g., invoke its operation, monitor its operation, control its operation) where writing the program is facilitated by the presence of the API **900.** Rather than programmer **920** having to understand the intemals of the system **910,** the programmer **920** merely has to learn the interface to the system **910.** This facilitates encapsulating the functionality of the system **910** while exposing that functionality.

Similarly, the API **900** can be employed to provide data values to the system **910** and/or retrieve data values from the system **910.** For example, a process **930** that selects unrendered content elements for which remote rendering is to be requested can provide an unrendered content element (e.g., UNICODE character code) to the system **910** via the API **900** by, for example, using a call provided in the API **900.** Thus, in one example of the API **900,** a set of application programming interfaces can be stored on a computer-readable medium. The interfaces can be employed by a programmer, computer component, logic, and so on, to gain access to a system **910** for remote content rendering for mobile viewing. The interfaces can include, but are not limited to, a first interface **940** that communicates an unrendered content element, a second interface **950** that communicates a desired rendered format data, and a third interface **960** that communicates a rendered content element produced in the desired rendered format from the unrendered content element. Thus, the various requesting and/or receiving logics described herein may employ API **900** to communicate with a remote rendering server. Similarly, various requesting and receiving actions described herein may be performed, at least in part, by interacting with API **900.**

While example systems, methods, and so on, have been illustrated by describing examples, and while the examples have been described in considerable detail, it is not the intention of the applicants to restrict or in any way limit the scope of the appended claims to such detail. It is, of course, not possible to describe every conceivable combination of components or methodologies for purposes of describing the systems, methods, and so on, described herein. Additional advantages and modifications will readily appear to those skilled in the art. Therefore, the invention is not limited to the specific details, the representative apparatus, and illustrative examples shown and described. Thus, this application is intended to embrace alterations, modifications, and variations that fall within the scope of the appended claims. Furthermore, the preceding description is not meant to limit the scope of the invention. Rather, the scope of the invention is to be determined by the appended claims and their equivalents.

To the extent that the term "includes" or "including" is employed in the detailed description or the claims, it is intended to be inclusive in a manner similar to the term "comprising" as that term is interpreted when employed as a transitional word in a claim. Furthermore, to the extent that the term "or" is employed in the detailed description or claims (e.g., A or B) it is intended to mean "A or B or both" (e.g., A and/or B). When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995).

## Claims

1. A system (100), comprising:
an identifying logic (110) configured to identify a content element for which a rendering request may be made to a remote rendering server (120);
a requesting logic (130) configured to provide the rendering request to the remote rendering server (120);
a receiving logic (140) configured to receive a rendered version of the content element from the remote rendering server (120) in response to the rendering request; and
a distribution logic (150) configured to distribute the rendered version of the content element to an output logic.

2. The system (100) of claim 1, the system (100) being operably connected to a mobile telephone, and the output logic being one of, a display associated with the mobile telephone, and a print logic associated with a printer.

3. The system (100) of claim 2, the distribution logic (150) being configured to distribute the rendered version of the content element to a first output logic associated with the mobile telephone and a second output logic associated with the printer, the content element comprising one of, a glyph, a font element, a character, a vector graphics based figure, a table, a chart, and a paragraph.

4. The system (100) of claim 3, the content element comprising one of, a static element associated with an XHTML template, and a dynamic element associated with the XHTML template.

5. The system (100) of claim 4, the rendered version of the content element being provided to the printer via a Bluetooth Basic Print Profile method.

6. The system (100) of claim 1, the identifying logic (110) being configured to identify the content element by comparing a first computing resource that is required to render the content element to a second computing resource that is available on a mobile computing platform with which the system (100) is associated.

7. The system (100) of claim 1, the receiving logic (140) being configured to cache the rendered version of the content element, and the identifying logic (110) or the requesting logic (130) being configured to search for a cached rendered content element before providing a rendering request to the remote rendering server (120).

8. A method (400), comprising:
identifying (410) a subset of printable elements in a set of printable elements available to a wireless computing device, where the subset of printable elements may be rendered by a logic remote from the wireless computing device;
requesting (420) remote rendering of the subset of printable elements;
in response to the request for remote rendering, receiving (430) a rendered version of the subset of printable elements; and
distributing (440) the rendered version of the subset of printable elements to one or more of, a display logic associated with the wireless computing device, and a print logic associated with the wireless computing device.

9. The method (400) of claim 8, where the subset of printable elements comprise less than an entire document in the wireless computing device, and
where the printable elements include one or more of, a glyph, a font element, a character, and a vector graphics based figure.

10. The method (400) of claim 9, where identifying (410) the subset of printable elements includes comparing a first computing resource required to render the subset of printable elements to a second computing resource available to render the subset of printable elements;
where requesting (420) remote rendering of the subset of printable elements includes transmitting a wireless computer communication via one or more of, an IEEE 802.15.1 protocol message, an IEEE 802.11 protocol message, an IEEE 802.15.4 protocol message, and a cellular telephone message, and
where receiving (430) a rendered version of the subset of printable elements includes caching the rendered version.
